# FASCICULE DE BREVET EUROPEEN

(11) **EP 1 299 311 B1**
(45) Date de publication et mention de la délivrance du brevet: **22.09.2004**
(21) Numéro de dépôt: 00946013.0
(22) Date de dépôt: 23.06.2000
(51) Int. Cl.: C02F 1/461

(54) **PROCEDE ET DISPOSITIF DE TRAITEMENT D'EFFLUENTS INDUSTRIELS EN VUE DE L'ELIMINATION DE LA POLLUTION ORGANIQUE ET/OU MINERALE**
VERFAHREN UND ANORDNUNG FÜR DIE BEHANDLUNG VON INDUSTRIELLEN ABWÄSSERN ZUR BESEITIGUNG DER ORGANISCHEN VERSCHMUTZUNG
METHOD AND DEVICE FOR TREATING INDUSTRIAL EFFLUENTS TO ELIMINATE ORGANIC AND/OR MINERAL POLLUTION

(43) Date de publication de la demande: 09.04.2003
(73) Titulaire: Lacaze S.A., 46120 Leyme (FR); Institut Français du Pétrole, 92852 Rueil-Malmaison Cedex (FR)
(72) Inventeur: LACAZE, Pierre, F-46120 Leyme (FR)
(86) Numéro de dépôt international: PCT/FR2000/001777
(87) Numéro de publication internationale: WO 2001/098213

(56) Documents cités:
- EP-A- 0 297 738
- FR-A- 2 240 892
- FR-A- 2 513 662
- FR-A- 2 792 307
- US-A- 3 703 453
- US-A- 4 752 364
- US-A- 5 516 972

## Description

La présente invention a pour objet un procédé et un dispositif visant le traitement ou le prétraitement des effluents industriels, en particulier les effluents renfermant des polluants divers, matières organiques solubles, matières organiques insolubles, organométalliques, sulfures, colorants, métaux dissous.

La pollution organique est présente dans les effluents industriels sous diverses formes, soit dissoute, soit sous forme de colloïdes, ou encore combinée à des métaux.

La pollution minérale dans les effluents industriels peut prendre des formes chimiques variables, sous forme d'ions métalliques, de sels dissous ou encore être combinée à la matière organique.

Il existe à l'heure actuelle de nombreux procédés de traitement des pollutions usuelles. La majorité de ces procédés sont à base d'un traitement physico-chimique (coagulation, floculation) ou biologique (lagunage, ...).

Ces procédés classiques ont toutefois des limites communes, et un seuil d'efficacité souvent faible.

Parmi les inconvénients des procédés physico-chimiques, on peut. citer la quantité de boues produites ainsi que l'incapacité de ces procédés à éliminer la pollution organique soluble.

Les inconvénients des traitements biologiques résident dans la taille des installations nécessaires, la quantité de boues produites ainsi que l'inhibition de ces traitements en présence de certains éléments organiques (solvant, huile soluble) et minéraux (sulfures).

De plus, dans la majorité des cas, la combinaison des procédés physico-chimiques et biologiques s'avère indispensable pour assurer une bonne performance du traitement. Toutefois, ces techniques à coûts élevés et à gestion contraignante deviennent de moins en moins acceptables pour traiter un effluent industriel in situ.

Il existe également des techniques nouvelles visant le traitement des effluents industriels : l'ozonation et les procédés membranaires.

Les inconvénients de ces procédés résident dans leur incapacité à détruire complètement les molécules organiques.

En effet, et en premier lieu, l'application de la technique d'ozonation sur les colorants des bains de teinture de l'industrie textile montre que, même si la demande chimique en oxygène (DCO) des effluents baisse d'une manière significative, le carbone organique total (COT) des effluents reste constant. En fait, dans certains cas, l'ozonation se réduit à une oxydation des molécules organiques par blocage de la mobilité électronique, sans pour autant atteindre l'oxydation des atomes élémentaires constituant le corps organique. Par ailleurs, et en plus de cet inconvénient technique, le procédé d'ozonation reste encore onéreux et n'en est qu'au stade de développement en vue de son utilisation en industrie.

Concernant les techniques membranaires, ces dernières s'avèrent inertes vis-à-vis de la matière organique soluble. Par ailleurs, et en plus de cet inconvénient, ces techniques s'avèrent inaptes à traiter des débits d'effluents élevés.

En fait, en dehors de la combinaison de traitements physico-chimiques ou biologiques, les autres techniques s'avèrent seulement applicables pour des cas spéciaux.

La présente invention vise à combler cette absence de solution alternative aux traitements physico-chimiques et biologiques, et a pour principal objectif de fournir une solution alternative basée sur des opérations électrolytiques, physiques et chimiques, palliant les inconvénients des traitements actuels.

A cet effet, l'invention vise un procédé de traitement comportant les étapes successives suivantes :
- acidification de l'effluent par introduction dans ce dernier d'un acide apte à rendre insoluble les matières organiques,
- filtration de l'effluent en vue de l'élimination des matières insolubles,
- électrolyse de l'effluent en présence d'une solution catalytique pure de chlorure ou de sulfate renfermant des cations ayant au moins deux degrés d'oxydation stable,
- et neutralisation de l'effluent par introduction dans ce dernier d'une base alcaline dans des quantités adaptées pour obtenir un pH sensiblement neutre.

Le procédé de l'invention comporte donc une pluralité d'étapes successives de mise en oeuvre aisée, se combinant les unes aux autres pour fournir un processus complet de traitement des effluents au cours duquel est éliminée la pollution organique et/ou minérale.

La première étape d'acidification de ce procédé, effectuée par introduction d'un acide approprié dans l'effluent, tel qu'avantageusement de l'acide chlorhydrique ou de l'acide sulfurique, a pour objet une première attaque des corps organiques.

En effet, les acides attaquent les matières organiques pour les rendre insolubles. C'est le cas, par exemple, de l'attaque des alcools par l'acide chlorhydrique avec formation de sels R-C1 insolubles dans l'eau, ou encore le cas de l'attaque des solvants par l'acide sulfurique, avec formation d'un précipité sous forme de cristaux.

De. plus, cette étape d'acidification conduit à réguler le pH de l'effluent en vue de favoriser l'opération d'électrolyse. Ainsi, et de façon avantageuse, l'acide est introduit en quantités adaptées pour obtenir un pH de l'effluent compris entre 1,5 et 5.

La deuxième étape consiste, ensuite, à filtrer l'effluent de façon à éliminer au moins grossièrement les matières insolubles formées après l'attaque acide, et celles éventuellement présentes initialement dans l'effluent.

La troisième étape d'électrolyse catalytique consiste en une réduction ou une oxydation de molécules organiques en présence d'un catalyseur constitué d'une solution pure de chlorure ou sulfate renfermant des cations ayant au moins deux degrés d'oxydation stable. (Il convient de noter que par solution pure, on entend définir que la solution est exempte d'autres cations métalliques susceptibles de gêner l'aspect catalytique ou la neutralisation ultérieure).

Il convient également de noter que, bien que, de façon classique, la solution catalytique est généralement introduite dans l'effluent, celle-ci peut éventuellement être générée in-situ, lors de l'électrolyse, lorsque l'effluent renferme des sels métalliques dissous.

Cette étape d'électrolyse assure deux fonctions différentes. La première favorise la neutralisation des charges négatives des molécules colloïdales grâce à la présence des cations, et conduit à la flottation de la matière organique insoluble. La seconde fonction assurée est l'oxydation de la matière organique soluble. En effet, les molécules organiques sont dirigées vers l'anode, siège du dégagement d'oxygène, et subissent une oxydation ménagée catalysée par les cations.

Le choix du catalyseur est, en outre, un élément fondamental pour cette étape d'électrolyse. En effet, la catalyse est beaucoup plus efficace si le couple catalyseur/matière organique est judicieusement choisi, de façon à diminuer le plus possible l'énergie d'activation caractérisant la réaction d'oxydation de la molécule organique par l'oxygène naissant à l'anode.

Ainsi, à titre d'exemples, pour l'oxydation des alcools solubles, le catalyseur le plus efficace est le sulfate ferrique ou le chlorure ferrique. Pour l'oxydation des glycols, le catalyseur approprié est le chlorure ferreux ou le sulfate ferreux. Pour le cas des organohalogénés, la catalyse est beaucoup plus efficace en milieu AgCl₂.

La dernière étape de neutralisation, assurée par introduction d'une base alcaline, permet enfin de réaliser de nombreuses fonctions parmi lesquelles peuvent être citées :
- la régulation du pH à une valeur neutre permettant notamment d'éviter tout effet ultérieur de saponification de la matière organique oxydée et sa résolubilisation dans la phase aqueuse,
- l'élimination des cations du catalyseur par formation d'hydroxydes métalliques décantables,
- la clarification de l'effluent,
- et l'élimination de la matière en suspension.

Selon un mode de mise en oeuvre avantageux, on procède, après l'étape de filtration, à une première électrolyse de l'effluent dans un électrolyseur comportant au moins deux compartiments séparés par une paroi en un matériau poreux et renfermant respectivement, l'un une anode, et l'autre une cathode.

Cette première électrolyse dans des compartiments séparés assure plusieurs tâches séparées ou combinées telles que citées à titre d'exemples ci-dessous, pour des effluents donnés.

Dans le cas d'un effluent renfermant des organométalliques, l'électrolyse à compartiments séparés permet de dissocier la molécule organométallique en fraction métallique dans le compartiment cathodique, et organique dans le compartiment anodique. Cette dissociation permet à la fois l'élimination des métaux sous forme de dépôt cathodique ou de particules décantées, et de la matière organique par démixtion.

Dans le cas d'un effluent renfermant des solvants et des colloïdes, tel que par exemple les effluents de sérigraphie ou les huiles solubles, l'électrolyse à compartiments séparés conduit à deux effets : une aéroflottation suite au dégagement d'hydrogène à la cathode et d'oxygène à l'anode, et une neutralisation des charges négatives des colloïdes suite à l'imperfection de leur réseau cristallin. L'aéroflotattion permet l'élimination poussée des solvants ; la neutralisation des charges négatives des colloïdes permet leur déstabilisation et rend ces molécules insolubles. De ce fait, l'élimination de ces polluants des effluents industriels peut se faire par un simple raclage ou tout autre opération permettant une séparation gravitaire de phases.

Dans le cas d'un effluent renfermant des sulfures, tels que par exemple les effluents de picklage dans les ateliers de délainage, l'application de l'électrolyse à compartiments séparés permet l'oxydation des sulfures en sulfates. En effet, les sulfures chargés négativement sont dirigés vers l'anode oxydante siège d'un dégagement d'oxygène, ce qui permet leur transformation en sulfate. De plus, la matière organique liée aux sulfures est rendue insoluble et éliminable sous forme de décantât ou de floques flottants.

Selon un autre mode de mise en oeuvre avantageux, on procède, après l'étape de neutralisation, à une adsorption sur charbon actif de l'effluent, en vue d'éliminer la matière organique résiduelle.

Cette étape d'adsorption sur charbon actif a pour but d'éliminer la matière organique résiduelle subsistant après l'étape de neutralisation, par exemple lorsque l'effluent renferme des tensioactifs, dans le cas où le but recherché est un traitement total de l'effluent en vue du recyclage de l'eau.

Il peut, en outre, être avantageusement procédé à une étape finale d'échange d'ions en vue d'éliminer les anions présents initialement dans l'effluent ou engendrés par l'ajout de la solution catalytique, et ce dans le cas où le but recherché est la quasi-potabilité de l'eau issue de l'effluent.

Par ailleurs, dans chaque étape d'électrolyse, on maintient avantageusement le pH de l'effluent à une valeur comprise entre 2 et 6, et la densité de courant à une valeur comprise entre 170 et 500 A/m². De plus :
- dans l'étape d'électrolyse catalytique, on maintient avantageusement le pH de l'effluent à une valeur comprise entre 2 et 5, et la densité de courant à une valeur comprise entre 300 et 500 A/m²,
- dans l'étape d'électrolyse à compartiments séparés, on maintient avantageusement le pH de l'effluent à une valeur comprise entre 3 et 5, et la densité de courant à une valeur comprise entre 170 et 300 A/m².

Par ailleurs, lors de l'étape d'électrolyse catalytique, on introduit avantageusement dans l'effluent la solution catalytique avec un dosage adapté pour obtenir une concentration en cations comprise entre 20 mg/l et 4 g/l, et préférentiellement comprise entre 20 mg/l et 300 mg/l.

L'invention s'étend à un dispositif de traitement d'effluents industriels comprenant :
- une unité d'acidification comprenant des moyens de dosage pour l'introduction d'une quantité prédéterminée d'acide dans l'effluent,
- des moyens de filtration de l'effluent acidifié aptes à éliminer les matières insolubles,
- une unité catalytique comprenant des moyens de dosage pour l'introduction, dans l'effluent filtré, d'une quantité prédéterminée de solution catalytique pure de chlorure ou sulfate renfermant des cations ayant au moins deux degrés d'oxydation stable,
- un électrolyseur, dit électrolyseur catalytique, apte à assurer l'électrolyse de l'effluent en présence de la solution catalytique,
- et une unité de neutralisation comprenant des moyens de dosage pour l'introduction dans l'effluent ayant subi l'électrolyse catalytique, d'une quantité prédéterminée de base alcaline adaptée pour obtenir un pH sensiblement neutre.

Ce dispositif de traitement comprend, en outre, avantageusement, disposé entre les moyens de filtration et l'unité catalytique, un électrolyseur comportant au moins deux compartiments séparés par une paroi poreuse réalisée en un matériau poreux, et renfermant l'un une anode et l'autre une cathode.

Cet électrolyseur à compartiments séparés comporte avantageusement, un réservoir constitué d'une cuve cylindrique d'axe de révolution (y) sensiblement vertical, prolongée d'une portion inférieure de paroi de forme conique, la paroi poreuse s'étendant dans la cuve cylindrique et comportant une paroi latérale cylindrique coaxiale avec l'axe (y) et une base inférieure circulaire, de façon à diviser le réservoir en :
- un compartiment périphérique s'étendant entre ledit réservoir et ladite paroi poreuse et renfermant une cathode cylindrique coaxiale avec l'axe (y), de hauteur sensiblement équivalente à celle de la cuve cylindrique,
- un compartiment central de forme cylindrique délimité par ladite paroi poreuse et renfermant une anode cylindrique coaxiale avec l'axe (y) et de hauteur sensiblement équivalente à celle dudit compartiment central.

De plus, la paroi poreuse de cet électrolyseur est avantageusement réalisée en un polymère présentant une structure poreuse.

Par ailleurs, chaque anode de chaque électrolyseur est avantageusement du type insoluble, et constituée d'une âme en titane et d'un revêtement en oxyde mixte de métaux précieux tels que notamment oxyde d'iridium et oxyde de ruthénium, chaque cathode desdits électrolyseurs étant réalisée en INOX 316L.

Le dispositif de traitement comporte également, de façon avantageuse, des moyens de filtration de l'effluent neutralisé par adsorption sur charbon actif.

De plus, ces moyens de filtration par adsorption compreiment, avantageusement, une cartouche renfermant un empilement de filtres à charbon actif se présentant sous la forme de disques.

Le dispositif de traitement comporte, enfin, de façon avantageuse, un échangeur d'ions situé en aval des moyens de filtration par adsorption. De plus, cet échangeur d'ions est avantageusement un échangeur d'anions fortement basique.

D'autres caractéristiques, buts et avantages de l'invention ressortiront de la description détaillée qui suit en référence aux dessins annexés qui en représentent à titre d'exemple non limitatif un mode de réalisation préférentiel. Sur ces dessins :

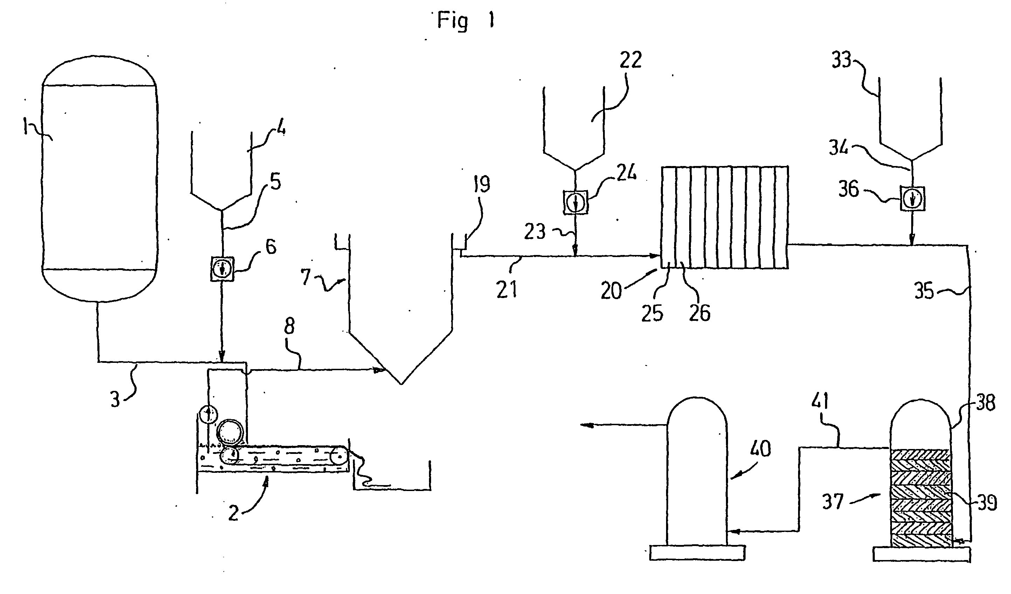

- la figure 1 est un schéma synoptique d'un dispositif de traitement conforme à l'invention,
- la figure 2 est une coupe longitudinale schématique par un plan vertical A de l'électrolyseur à compartiments séparés de ce dispositif de traitement,
- la figure 3 est une coupe transversale schématique par un plan horizontal B de cet électrolyseur à compartiments séparés,
- et la figure 4 est une coupe longitudinale schématique de l'électrolyseur catalytique de ce dispositif de traitement.

Le dispositif de traitement d'effluents selon l'invention est adapté pour fournir un process complet permettant l'élimination de la pollution organique et minérale et conduisant à l'obtention d'une eau quasi-potable. Il est à noter que ce dispositif est représenté de façon schématique, seuls apparaissant les éléments essentiels de l'invention, les autres moyens classiques destinés notamment au retrait des matières en flottation ou décantées, les moyens de pompage... n'étant quant à eux pas représentés.

Le dispositif de traitement comprend, en premier lieu, un réservoir-tampon 1 de stockage de l'effluent, à partir duquel cet effluent est délivré vers des moyens de filtration consistant en un filtre à bande 2, par une canalisation 3.

De plus, il comprend, interposée entre le réservoir 1 et le filtre à bande 2, une unité d'acidification adaptée pour injecter un acide tel qu'acide chlorhydrique ou acide sulfurique, dans la canalisation 3.

Cette unité d'acidification se compose d'une cuve 4 de stockage de l'acide et d'une conduite 5 raccordée à la canalisation 3, sur laquelle est installée une pompe doseuse 6.

Le dispositif de traitement comprend, ensuite, un premier électrolyseur 7 à compartiments séparés vers lequel l'effluent filtré débarrassé des matières insolubles est acheminé par une canalisation 8.

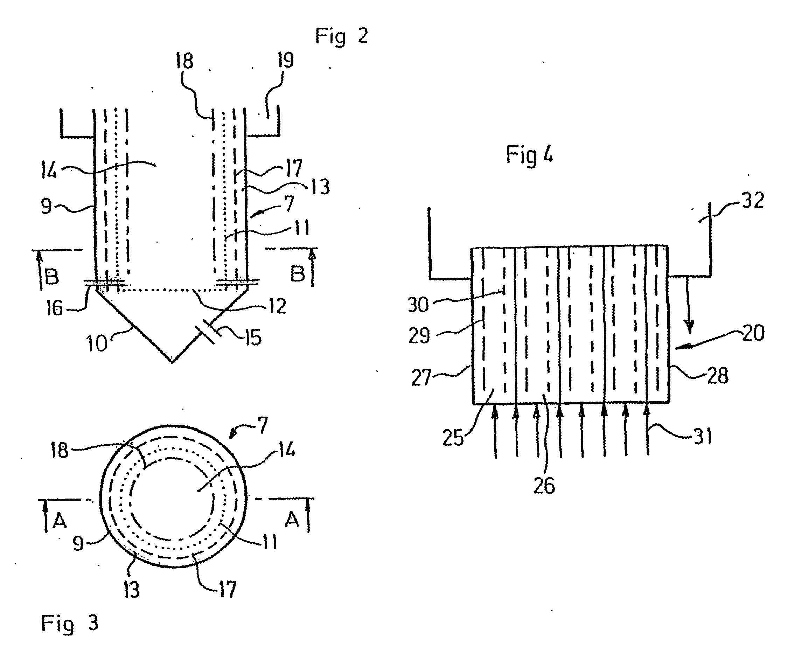

Tel que représenté aux figures 2 et 3, l'électrolyseur 7 comporte, en premier lieu, un réservoir consistant en une cuve cylindrique 9 prolongée et obturée par une portion inférieure de paroi 10 conique.

A l'intérieur de cette cuve cylindrique 9, et sur toute la hauteur de cette dernière, est disposée une paroi poreuse cylindrique 11 en polymère, tel que polyéthylène où polypropylène, présentant une structure poreuse, obturée au niveau de sa base par une paroi circulaire 12 en un même matériau.

Tel que représenté aux figures 2 et 3, l'électrolyseur 7 se trouve ainsi divisé en deux compartiments 13, 14 à l'intérieur de chacun desquels une fraction de volume de l'effluent est délivrée par des conduits d'alimentation tels que 15, 16 :
- un compartiment périphérique 13 délimité par les parois 9, 10 du réservoir et les parois poreuses 11, 12, à l'intérieur duquel est disposée une cathode cylindrique 17 en INOX 316L, de hauteur sensiblement égale à celle de la cuve cylindrique 9,
- un compartiment central 14 délimité par les parois poreuses 11, 12, à l'intérieur duquel est disposée une anode insoluble 18 de forme cylindrique, de hauteur sensiblement égale à celle dudit compartiment interne. Cette anode insoluble 18 est, en outre, constituée d'une âme en titane et d'un revêtement en oxyde mixte de matériaux précieux, tels que l'oxyde d'iridium et l'oxyde de ruthénium.

De plus, et de façon classique, l'anode 18 et la cathode 17 sont connectées à un redresseur de courant (non représenté).

L'électrolyseur 7 comprend, enfin, une goulotte supérieure externe 19 dans laquelle l'effluent ayant transité dans le réservoir est déversé de façon classique par surverse.

Le dispositif de traitement comprend également un second électrolyseur 20 vers lequel l'effluent est acheminé par une canalisation 21.

De plus, il comprend, interposée entre les deux électrolyseurs 7, 20, une unité catalytique adaptée pour injecter une solution catalytique pure de chlorure ou de sulfate renfermant des cations ayant au moins deux degrés d'oxydation stable, tels que du fer (Fe²⁺, Fe³⁺), du cuivre (Cu⁺, Cu²⁺) ou de l'argent (Ag⁺,Ag²⁺).

Cette unité catalytique se compose d'une cuve 22 de stockage de la solution catalytique, et d'une conduite 23 raccordée à la canalisation 21, sur laquelle est installée une pompe doseuse 24.

Tel que représenté à la figure 4, le second électrolyseur 20, de forme parallélépipédique, est formée, par exemple, par l'assemblage de plusieurs éléments tels que 25, 26 en forme de U, et obturé par deux plaques latérales 27, 28 d'extrémité.

De plus, chaque compartiment 25, 26 renferme une cathode telle que 29 et une anode insoluble, telle que 30, planes disposées en vis-à-vis. Ces cathodes 29 et anodes 30 sont réalisées en des matériaux identiques à ceux des cathode 17 et anode 18 du premier électrolyseur 7, et sont alimentées classiquement par l'intermédiaire d'un redresseur de courant (non représenté).

Le second électrolyseur 20 comprend, en outre, une pluralité de conduits d'alimentation tels que 31 répartis sous les compartiments 25, 26, et une goulotte supérieure externe 32 dans laquelle l'effluent ayant transité dans lesdits compartiments est déversé par surverse.

Le dispositif de traitement comprend également une unité de neutralisation adaptée pour injecter dans l'effluent, après l'électrolyse catalytique de ce dernier, une base alcaline, telle que soude ou chaux.

Cette unité de neutralisation se compose d'une cuve 33 de stockage de la base alcaline, et d'une conduite 34 raccordée à la canalisation 35 véhiculant l'effluent en sortie du second catalyseur 20, sur laquelle est installée une pompe doseuse 36.

Le dispositif de traitement comporte, par ailleurs, un filtre à charbon actif 37 vers lequel est acheminé, par la canalisation 35, l'effluent neutralisé. Ce filtre 37 se compose d'une cartouche 38 à l'intérieur de laquelle sont empilées des filtres de charbon actif, tels que 39, se présentant sous la forme de disques.

Le dispositif de traitement comprend, enfin, un échangeur d'anions 40 fortement basique vers lequel l'effluent est acheminé par une canalisation 41.

A titre d'illustration, quelques exemples d'application du procédé selon l'invention sur différents effluents sont décrits ci-dessous.

### 1°) Effluents de sérigraphie

Cet effluent de sérigraphie a subi un traitement complet, avec des conditions opératoires suivantes :
- acide utilisé : acide sulfurique dosé de façon à obtenir un pH de l'effluent acidifié égal à 5,
- électrolyseur 7 à compartiments séparés :
   . densité de courant : 250 A/m²
   . maintien au pH à une valeur de : 5
- solution catalytique utilisée : FeCl₂. dosé de façon à obtenir une concentration en cations de : 250 mg/l
- électrolyseur catalytique 20 :
   . densité de courant : 300 A/m²
   . maintien du pH à une valeur de 4
- base alcaline utilisée : Soude

Les résultats du traitement sont regroupés dans le tableau suivant :

| Paramètres | Avant traitement | Après traitement |
|---|---|---|
| DCO (mg O₂/l) | 6230 | 40 |
| pH | 11.8 | 7 |
| Couleur (unité Pt/Co) | 1600 | 25 |
| MES (mg/l) | 1000 | 7 |

On constate, à la lecture de ces résultats que le traitement effectué a permis de régénérer l'eau de façon à autoriser son recyclage et sa réutilisation.

### 2°) Effluents d'industrie de fabrication de catalyseurs chimiques

Le traitement a été effectué uniquement jusqu'à l'étape de neutralisation (incluse), c'est-à-dire sans adsorption sur charbon actif ni échange d'ions, dans les conditions opératoires suivantes :
- acide utilisé : acide chlorhydrique dosé de façon à obtenir un pH de l'effluent acidifié égal à 3,
- électrolyseur 7 à compartiments séparés :
   . densité de courant : 250 A/m²
   . maintien au pH à une valeur de : 3
- solution catalytique utilisée : Fe Cl₃. dosé de façon à obtenir une concentration en cations de : 3 g/l
- électrolyseur catalytique 20 :
   . densité de courant : 350 A/m²
   . maintien du pH à une valeur de 2
- base alcaline utilisée : chaux

Les résultats du traitement sont regroupés dans le tableau suivant :

| Paramètres | Avant traitement | Après traitement |
|---|---|---|
| DCO (mg O₂/l) | 75000 | 1200 |
| MES (mg/l) | 8000 | 8 |
| Couleur (unité Pt/Co) | 3000 | 20 |
| Métaux (mg/l) | 10000 | 5 |

### 3°) Effluents issus de caves à vins

De même que précédemment, le traitement a été effectué jusqu'à l'étape de neutralisation ( incluse), dans les conditions opératoires suivantes :
- acide utilisé : acide sulfurique dosé de façon à obtenir un pH de l'effluent acidifié égal à 4
- électrolyseur 7 à compartiments séparés :
   . densité de courant : 170 A/m²
   . maintien au pH à une valeur de : 3,5
- solution catalytique utilisée : Fe SO₄. dosé de façon à obtenir une concentration en cations de : 1 g/l
- électrolyseur catalytique 20 :
   . densité de courant : 500 A/m²
   . maintien du pH à une valeur de 2
- base alcaline utilisée : Soude

Les résultats du traitement sont regroupés dans le tableau suivant :

| Paramètres | Avant traitement | Après traitement |
|---|---|---|
| DCO (mg O₂/l) | 16000 | 1500 |
| MES (mg/l) | 700 | 7 |
| Couleur (unité Pt/Co) | 700 | 17 |

### 4°) Effluents de teinture de l'industrie textile

Le traitement a été effectué uniquement jusqu'à l'étape de neutralisation (incluse), mais sans effectuer d'électrolyse dans l'électrolyseur 7 à compartiments séparés, dans les conditions opératoires suivantes:
- acide utilisé : acide sulfurique dosé de façon à obtenir un pH de l'effluent acidifié égal à 5
- solution catalytique utilisée : Fe₂ (SO₄)₃ dosé de façon à obtenir une concentration en cations de : 100 mg/l
- électrolyseur catalytique 20 :
   . densité de courant : 500 A/m²
   . maintien du pH à une valeur de 3
- base alcaline utilisée : Chaux

Les résultats du traitement sont regroupés dans le tableau suivant :

| Paramètres | Avant traitement | Après traitement |
|---|---|---|
| DCO (mg O₂/l) | 3100 | 300 |
| MES (mg/l) | 600 | 7 |
| Couleur (unité Pt/Co) | 10000 | 100 |

Ce traitement a permis de réaliser une décoloration parfaite de l'effluent.

### 5°) Effluents de blanchisserie

Le traitement a été effectué jusqu'à l'étape finale d'échange d'ions (incluse) mais sans effectuer l'électrolyse dans l'électrolyseur 7, sur un effluent renfermant une DCO équivalente à 3000 mg O₂/l, des matières en suspension allant jusqu'à 2000 mg/l et des tensioactifs. Les conditions opératoires ont été les suivantes :
- acide utilisé : acide chlorhydrique dosé de façon à obtenir un pH de l'effluent acidifié égal à 4,5
- solution catalytique utilisée : Fe Cl₂. dosé de façon à obtenir une concentration en cations de : 150 mg/l
- électrolyseur catalytique 20 :
   . densité de courant : 320 A/m²
   . maintien du pH à une valeur de 4
- base alcaline utilisée : Soude

Le traitement a permis de régénérer l'eau avec une qualité potable permettant de la réutiliser dans le procédé de blanchisserie.

## Revendications

1. Procédé de traitement d'effluents industriels en vue de l'élimination de la pollution organique et/ou minérale, **caractérisé en ce qu'**il comporte les étapes successives suivantes :
- acidification de l'effluent par introduction dans ce dernier d'un acide apte à rendre insoluble les matières organiques,
- filtration de l'effluent en vue de l'élimination des matières insolubles,
- électrolyse de l'effluent en présence d'une solution catalytique pure. de chlorure ou de sulfate renfermant des cations ayant au moins deux degrés d'oxydation stable,
- et neutralisation de l'effluent par introduction dans ce dernier d'une base alcaline dans des quantités adaptées pour obtenir un pH sensiblement neutre.

2. Procédé de traitement selon la revendication 1, **caractérisé en ce que**, après l'étape de filtration, on procède à une première électrolyse de l'effluent dans un électrolyseur (7) comportant au moins deux compartiments (13, 14) séparés par une paroi (11, 12) en un matériau poreux et renfermant respectivement, l'un une anode (18), et l'autre une cathode (17).

3. Procédé de traitement selon l'une des revendications 1 ou 2, **caractérisé en ce que**, après l'étape de neutralisation, on procède à une adsorption sur charbon actif de l'effluent, en vue d'éliminer la matière organique résiduelle.

4. Procédé de traitement selon l'une des revendications précédentes, **caractérisé en ce que** l'on procède à une étape finale d'échange d'ions en vue d'éliminer les anions contenus dans l'effluent.

5. Procédé de traitement selon la revendication 2, **caractérisé en ce que**, dans chaque étape d'électrolyse, on maintient le pH de l'effluent à une valeur comprise entre 2 et 6, et la densité de courant à une valeur comprise entre 170 et 500 A/m².

6. Procédé de traitement selon la revendication 5, **caractérisé en ce que**, dans l'étape d'électrolyse catalytique, on maintient le pH de l'effluent à une valeur comprise entre 2 et 5, et la densité de courant à une valeur comprise entre 300 et 500 A/m².

7. Procédé de traitement selon l'une des revendications 5 ou 6, **caractérisé en ce que**, dans l'étape d'électrolyse à compartiments séparés, on maintient le pH de l'effluent à une valeur comprise entre 3 et 5, et la densité de courant à une valeur comprise entre 170 et 300 A/m².

8. Procédé de traitement selon l'une des revendications précédentes, **caractérisé en ce que** l'acide utilisé dans l'étape d'acidification est de l'acide chlorhydrique ou de l'acide sulfurique.

9. Procédé de traitement selon la revendication 8, **caractérisé en ce que** l'acide est introduit en quantités adaptées pour obtenir un pH de l'effluent compris entre 1,5 et 5.

10. Procédé de traitement selon l'une des revendications précédentes, **caractérisé en ce que**, lors de l'étape d'électrolyse catalytique, on introduit dans l'effluent la solution catalytique avec un dosage adapté pour obtenir une concentration en cations comprise entre 20 mg/l et 4 g/l.

11. Procédé de traitement selon la revendication 10, **caractérisé en ce que** le dosage en solution catalytique est adapté pour obtenir une concentration en cations comprise entre 20 mg/l et 300 mg/l.

12. Dispositif de traitement d'effluents industriels en vue de l'élimination de la pollution organique et/ou minérale, **caractérisé en ce qu'**il comprend en combinaison :
- une unité d'acidification (4-6) comprenant des moyens de dosage (6) pour l'introduction d'une quantité prédéterminée d'acide dans l'effluent,
- des moyens (2) de filtration de l'effluent acidifié aptes à éliminer les matières insolubles,
- une unité catalytique (22-24) comprenant des moyens de dosage (24) pour l'introduction, dans l'effluent filtré, d'une quantité prédéterminée de solution catalytique pure de chlorure ou sulfate renfermant des cations ayant au moins deux degrés d'oxydation stable,
- un électrolyseur (20), dit électrolyseur catalytique, apte à assurer l'électrolyse de l'effluent en présence de la solution catalytique,
- et une unité de neutralisation (33, 34, 36) comprenant des moyens de dosage (36) pour l'introduction dans l'effluent ayant subi l'électrolyse catalytique, d'une quantité prédéterminée de base alcaline adaptée pour obtenir un pH sensiblement neutre.

13. Dispositif de traitement selon la revendication 12, **caractérisé en ce qu'**il comprend, disposé entre les moyens de filtration (2) et l'unité catalytique (22-24), un électrolyseur (7) comportant au moins deux compartiments (13, 14) séparés par une paroi poreuse réalisée en un matériau poreux, et renfermant l'un une anode (18) et l'autre une cathode (17).

14. Dispositif de traitement selon la revendication 13, **caractérisé en ce que** l'électrolyseur (7) à compartiments séparés (13, 14) comporte un réservoir constitué d'une cuve cylindrique (10) d'axe de révolution (y) sensiblement vertical, prolongée d'une portion inférieure de paroi (11) de forme conique, la paroi poreuse (11, 12) s'étendant dans la cuve cylindrique (10) et comportant une paroi latérale cylindrique (11) coaxiale avec l'axe (y) et une base inférieure circulaire (12), de façon à diviser le réservoir en :
- un compartiment périphérique (13) s'étendant entre ledit réservoir et ladite paroi poreuse et renfermant une cathode cylindrique (17) coaxiale avec l'axe (y), de hauteur sensiblement équivalente à celle de la cuve cylindrique (10),
- un compartiment central (14) de forme cylindrique délimité par ladite paroi poreuse et renfermant une anode cylindrique (18) coaxiale avec l'axe (y) et de hauteur sensiblement équivalente à celle dudit compartiment central.

15. Dispositif de traitement selon l'une des revendications 13 ou 14, **caractérisé en ce que** la paroi poreuse (11, 12) est réalisée en un polymère présentant une structure poreuse.

16. Dispositif de traitement selon l'une des revendications 13 à 15, **caractérisé en ce que** chaque anode (18, 30) de chaque électrolyseur (7, 20) est du type insoluble, et constituée d'une âme en titane et d'un revêtement en oxyde mixte de métaux précieux tels que notamment oxyde d'iridium et oxyde de ruthénium, chaque cathode (17, 29) desdits électrolyseurs étant réalisée en INOX 316L.

17. Dispositif de traitement selon l'une des revendications 12 à 16, **caractérisé en ce que** les moyens de filtration comprennent un filtre à bande (2).

18. Dispositif de traitement selon l'une des revendications 12 à 17, **caractérisé en ce qu'**il comprend des moyens (37) de filtration de l'effluent neutralisé par adsorption sur charbon actif.

19. Dispositif de traitement selon la revendication 18, **caractérisé en ce que** les moyens de filtration par adsorption (37) comprennent une cartouche (38) renfermant un empilement de filtres (39) à charbon actif se présentant sous la forme de disques.

20. Dispositif de traitement selon l'une des revendications 18 ou 19, **caractérisé en ce qu'**il comprend un échangeur d'ions (40) situé en aval des moyens de filtration par adsorption (37).

21. Dispositif de traitement selon la revendication 20, **caractérisé en ce que** l'échangeur d'ions (40) est un échangeur d'anions fortement basique.

## Patentansprüche

1. Verfahren zur Behandlung industrieller Abströme zur Eliminierung der organischen und/oder mineralischen Verunreinigung, **dadurch gekennzeichnet, dass** es die folgenden Stufen umfasst:
a. Säuerung des Abstroms durch Einführen einer die organischen Materialien unlöslich machenden Säure in letzteren,
b. Filtration des Abstroms zur Eliminierung unlöslicher Materialien,
c. Elektrolyse des Abstroms in Anwesenheit einer katalytischen reinen Lösung von Chlorid oder Sulfat, welche Kationen mit wenigstens zwei stabilen Oxidationsgraden einschließt,
d. und Neutralisierung des Abstroms, indem in letzteren eine Alkalibase in Mengen, die geeignet sind, einen im Wesentlichen neutralen pH-Wert zu erhalten, eingeführt wird.

2. Behandlungsverfahren nach Anspruch 1, **dadurch gekennzeichnet, dass** nach der Filtrationsstufe man zu einer ersten Elektrolyse des Abstroms in einem Elektrolyseur (7) übergeht, der wenigstens zwei Kammern (13, 14) umfasst, welche durch eine Wandung (11, 12) aus einem porösen Material getrennt sind und jeweils, die eine eine Anode (18), die andere eine Kathode (17) einschließt.

3. Behandlungsverfahren nach einem der Ansprüche 1 oder 2, **dadurch gekennzeichnet, dass** nach der Neutralisationsstufe man zu einer Adsorption des Abstroms an Aktivkohle übergeht, um das restliche organische Material zu eliminieren.

4. Behandlungsverfahren nach einem der vorhergehenden Ansprüche, **dadurch gekennzeichnet, dass** man zu einer abschließenden Ionenaustauscherstufe übergeht, um die im Abstrom enthaltenen Anionen zu eliminieren.

5. Behandlungsverfahren nach Anspruch 2, **dadurch gekennzeichnet, dass** in jeder Elektrolysestufe man den pH-Wert des Abstroms auf einem Wert zwischen 2 und 6 und die Stromdichte auf einem Wert zwischen 170 und 500 A/m² hält.

6. Behandlungsverfahren nach Anspruch 5, **dadurch gekennzeichnet, dass** in der katalytischen Elektrolysestufe man den pH-Wert des Abstroms auf einem Wert zwischen 2 und 5 und die Stromdichte auf einem Wert zwischen 300 und 500 A/m² hält.

7. Behandlungsverfahren nach einem der Ansprüche 5 oder 6, **dadurch gekennzeichnet, dass** in der Elektrolysestufe mit getrennten Kammern man den pH-Wert des Abstroms auf einem Wert zwischen 3 und 5 und die Stromdichte auf einem Wert zwischen 170 und 300 A/m² hält.

8. Behandlungsverfahren nach einem der vorhergehenden Ansprüche, **dadurch gekennzeichnet, dass** die in der Säuerungsstufe verwendete Säure Chlorwasserstoffsäure oder Schwefelsäure ist.

9. Behandlungsverfahren nach Anspruch 8, **dadurch gekennzeichnet, dass** die Säure in Mengen eingeführt wird, die geeignet sind, einen pH-Wert des Abstroms zwischen 1,5 und 5 zu erhalten.

10. Behandlungsverfahren nach einem der vorhergehenden Ansprüche, **dadurch gekennzeichnet, dass** während der Stufe der katalytischen Elektrolyse man in den Abstrom die katalytische Lösung in einer Dosierung einführt, die geeignet ist, eine Kationenkonzentration zwischen 20 mg/l und 4 g/l zu erhalten.

11. Behandlungsverfahren nach Anspruch 10, **dadurch gekennzeichnet, dass** die Dosierung mit katalytischer Lösung so eingestellt ist, dass man eine Kationenkonzentration zwischen 20 mg/l und 300 mg/l erhält.

12. Vorrichtung zur Behandlung industrieller Abströme zur Eliminierung der organischen und/oder mineralischen Verunreinigung, **dadurch gekennzeichnet, dass** sie in Kombination umfasst:
a. eine Säuerungseinheit (4-6), welche Dosierungsmittel (6) zum Einführen einer bestimmten Menge Säure in den Abstrom umfasst,
b. Mittel (2) zur Filtration des gesäuerten Abstroms, die geeignet sind, die unlöslichen Materialien zu eliminieren,
c. eine katalytische Einheit (22-24), die Dosierungsmittel (24) umfasst, um in den filtrierten Abstrom eine bestimmte Menge reiner katalytischer Chlorid- oder Sulfatlösung einzuführen, welche Kationen mit wenigstens zwei stabilen Oxidationsgraden einschließt,
d. einen Elektrolyseur (20), katalytischer Elektrolyseur genannt, der geeignet ist, die Elektrolyse des Abstroms in Anwesenheit der katalytischen Lösung sicherzustellen,
e. und eine Neutralisationseinheit (33, 34, 36), welche Dosierungsmittel (36) umfasst, um in den Abstrom, der eine katalytische Elektrolyse erfahren hat, eine bestimmte Menge einer Alkalibase einzuführen, die geeignet ist, einen im Wesentlichen neutralen pH-Wert zu erhalten.

13. Behandlungsvorrichtung nach Anspruch 12, **dadurch gekennzeichnet, dass** sie, angeordnet zwischen den Filtrationsmitteln (2) und der katalytischen Einheit (22-24), einen Elektrolyseur (7) umfasst, der wenigstens zwei Kammern (13, 14) aufweist, die durch eine poröse Wand aus einem porösen Material getrennt sind, und die eine eine Anode (18) und die andere eine Kathode (17) einschließt.

14. Behandlungsvorrichtung nach Anspruch 13, **dadurch gekennzeichnet, dass** der Elektrolyseur (7) mit getrennten Kammern (13, 14) einen Speicher umfasst, der aus einem zylindrischen Bottich (10) von im Wesentlichen vertikaler Drehachse (y) gebildet ist und der durch einen unteren Wandungsteil (11) konischer Gestalt verlängert ist, wobei die poröse Wandung (11, 12) sich in den zylindrischen Bottich (10) hinein erstreckt und über eine seitliche zylindrische Wandung (11) koaxial mit der Achse (y) sowie eine untere kreisförmige Basis (12) verfügt, derart, dass der Speicher unterteilt wird in:
a. eine Umfangskammer (13), die sich zwischen diesem Speicher und dieser porösen Wandung erstreckt und eine zylindrische Kathode (17) koaxial mit der Achse (y) und von einer Höhe äquivalent der des zylindrischen Bottichs (10) einschließt, und
b. eine mittige Kammer (14) zylindrischer Gestalt, welche durch diese poröse Wandung begrenzt ist und eine zylindrische Anode (18) koaxial mit der Achse (y) und von einer Höhe einschließt, die im Wesentlichen äquivalent der dieser mittigen Kammer ist.

15. Behandlungsvorrichtung nach einem der Ansprüche 13 oder 14, **dadurch gekennzeichnet, dass** die poröse Wandung (11, 12) aus einem Polymer, das über eine poröse Struktur verfügt, realisiert ist.

16. Behandlungsvorrichtung nach einem der Ansprüche 13 bis 15, **dadurch gekennzeichnet, dass** jede Anode (18, 30) jedes Elektrolyseurs (7, 20) vom unlöslichen Typ ist und gebildet wird aus einer Seele aus Titan und einem Überzug aus einem Mischoxid von Edelmetallen wie insbesondere Iridiumoxid und Rutheniumoxid, wobei jede Kathode (17, 29) dieser Elektrolyseureinrichtungen aus INOX 316L hergestellt ist.

17. Behandlungsvorrichtung nach einem der Ansprüche 12 bis 16, **dadurch gekennzeichnet, dass** die Filtrationsmittel ein Band(sperr)filter (2) umfassen.

18. Behandlungsvorrichtung nach einem der Ansprüche 12 bis 17, **dadurch gekennzeichnet, dass** sie Filtrationsmittel (37) für den durch Adsorption an Aktivkohle neutralisierten Abstrom umfasst.

19. Behandlungsvorrichtung nach Anspruch 18, **dadurch gekennzeichnet, dass** die Adsorptionsfiltrationsmittel (37) eine Kartusche (38) umfassen, die eine Stapelung von Filtern (39) aus Aktivkohle, die in Form von Scheiben vorliegen, einschließt.

20. Behandlungsvorrichtung nach einem der Ansprüche 18 oder 19, **dadurch gekennzeichnet, dass** sie einen Ionenaustauscher (40) umfasst, der hinter den Adsorptionsfiltrationsmitteln (37) angeordnet ist.

21. Behandlungsvorrichtung nach Anspruch 20, **dadurch gekennzeichnet, dass** der Ionenaustauscher (40) ein stark basischer Anionenaustauscher ist.

## Claims

1. Method of treatment of industrial effluents with a view to the elimination of the organic and/or mineral pollution, ***characterised in that*** it comprises the following successive steps:
- acidification of the effluent by introducing into the latter an acid capable of making the organic matter insoluble,
- filtration of the effluent with a view to the elimination of the insoluble matter,
- electrolysis of the effluent in the presence of a pure catalytic solution of chloride or sulphate containing cations having at least two degrees of stable oxidation,
- and neutralisation of the effluent by introducing into the latter an alkaline base in quantities adapted to obtain a substantially neutral pH.

2. Method of treatment according to claim 1, ***characterised in that*** after the filtration step, a first electrolysis operation is carried out on the effluent in an electrolyser (7) comprising at least two compartments (13, 14) separated by a wall (11, 12) made of a porous material and enclosing respectively the one an anode (18) and the other a cathode (17).

3. Method of treatment according to one of claims 1 or 2, ***characterised in that*** after the neutralisation step, the effluent is subjected to adsorption on active carbon with a view to eliminating the residual organic matter.

4. Method of treatment according to one of the preceding claims, ***characterised in that*** a final ion exchange step is carried out with a view to eliminating the anions contained in the effluent.

5. Method of treatment according to claim 2, ***characterised in that*** in each electrolysis step, the pH of the effluent is maintained at a value lying between 2 and 6, and the current density at a value lying between 170 and 500 A/m².

6. Method of treatment according to claim 5, ***characterised in that*** in the catalytic electrolysis step, the pH of the effluent is maintained at a value lying between 2 and 5, and the current density at a value lying between 300 and 500 A/m².

7. Method of treatment according to one of claims 5 or 6, ***characterised in that*** in the electrolysis step with separate compartments, the pH of the effluent is maintained at a value lying between 3 and 5, and the current density at a value lying between 170 and 300 A/m².

8. Method of treatment according to one of the preceding claims, ***characterised in that*** the acid used in the acidification step is hydrochloric acid or sulphuric acid.

9. Method of treatment according to claim 8, ***characterised in that*** the acid is introduced in quantities adapted to obtain a pH for the effluent lying between 1.5 and 5.

10. Method of treatment according to one of the preceding claims, ***characterised in that*** during the catalytic electrolysis step, the catalytic solution is introduced into the effluent in a proportion adapted to obtain a concentration of cations lying between 20 mg/l and 4 g/l.

11. Method of treatment according to claim 10, ***characterised in that*** the proportion of catalytic solution is adapted to obtain a concentration of cations lying between 20 mg/l and 300 mg/l.

12. Device for treatment of industrial effluents with a view to the elimination of the organic and/or mineral pollution, ***characterised in that*** it comprises in combination:
- an acidification unit (4-6) comprising metering means (6) for introducing a predetermined quantity of acid into the effluent,
- means (2) for filtration of the acidified effluent capable of eliminating the insoluble matter,
- a catalytic unit (22-24) comprising metering means (24) for introducing into the filtered effluent a predetermined quantity of pure catalytic solution of chloride or sulphate containing cations having at least two degrees of stable oxidation,
- an electrolyser (20), referred to as a catalytic electrolyser, capable of carrying out the electrolysis of the effluent in the presence of the catalytic solution,
- and a neutralisation unit (33, 34, 36) comprising metering means (36) for introducing into the effluent having undergone the catalytic electrolysis a predetermined quantity of alkaline base adapted to obtain a substantially neutral pH.

13. Device for treatment according to claim 12, ***characterised in that*** it comprises, disposed between the filtration means (2) and the catalytic unit (22-24), an electrolyser (7) comprising at least two compartments (13, 14) separated by a porous wall made of a porous material and enclosing the one an anode (18) and the other a cathode (17).

14. Device for treatment according to claim 13, ***characterised in that*** the electrolyser (7) with separate compartments (13, 14) comprises a reservoir constituted by a cylindrical vessel (10) having a substantially vertical axis of revolution (y), extended by a lower portion of wall (11) of conical shape, the porous wall (11, 12) extending into the cylindrical vessel (10) and comprising a cylindrical side wall (11) coaxial with the axis (y) and a lower circular base (12), so as to divide the reservoir into:
- a peripheral compartment (13) extending between said reservoir and said porous wall and enclosing a cylindrical cathode (17) coaxial with the axis (y) and of a height substantially equivalent to that of the cylindrical vessel (10),
- a central compartment (14) of cylindrical shape delimited by said porous wall and enclosing a cylindrical anode (18) coaxial with the axis (y) and of a height substantially equivalent to that of said central compartment.

15. Device for treatment according to one of claims 13 or 14, ***characterised in that*** the porous wall (11, 12) is made of a polymer exhibiting a porous structure.

16. Device for treatment according to one of claims 13 to 15, ***characterised in that*** each anode (18, 30) of each electrolyser (7, 20) is of insoluble type, and constituted by a core of titanium and a covering of mixed oxide of precious metals such as in particular iridium oxide and ruthenium oxide, each cathode (17, 29) of said electrolysers being made of stainless steel INOX 316L.

17. Device for treatment according to one of claims 12 to 16, ***characterised in that*** the filtration means comprise a belt filter (2).

18. Device for treatment according to one of claims 12 to 17, ***characterised in that*** it comprises means (17) for filtration of the neutralised effluent by adsorption on active carbon.

19. Device for treatment according to claim 18, ***characterised in that*** the means for filtration by adsorption (37) comprise a cartridge (38) enclosing a stack of active carbon filters (39) in the form of discs.

20. Device for treatment according to one of claims 18 or 19, ***characterised in that*** it comprises an ion exchanger (40) located downstream of the means for filtration by adsorption (37).

21. Device for treatment according to claim 20, **characterised in that** the ion exchanger (40) is a highly basic anion exchanger.
